# EUROPEAN PATENT APPLICATION

(11) **EP 4 742 033 A1**
(43) Date of publication of application: **13.05.2026**
(21) Application number: 24931240.6
(22) Date of filing: 03.06.2024
(51) Int. Cl.: G06F 9/48

(54) **CACHE MANAGEMENT METHOD, CACHE MANAGEMENT APPARATUS, AND PROCESSOR AND ELECTRONIC APPARATUS**

(30) Priority: 29.03.2024 CN 202410381320
(71) Applicant: Hygon Information Technology Co., Ltd., Tianjin 300392 (CN)
(72) Inventor: PAN, Haiyang, Tianjin 300392 (CN); JIN, Weisong, Tianjin 300392 (CN)
(74) Representative: EIP
(86) International application number: PCT/CN2024/097021
(87) International publication number: WO 2025/200123

(57) **Abstract**

Provided in the embodiments of the present disclosure are a cache management method, a cache management apparatus, and a processor and an electronic apparatus. The cache management method comprises: acquiring a cache access preference of a first thread for a first cache of a multi-thread processor, which first thread is among a plurality of threads running in the multi-thread processor; and in response to the cache access preference of the first thread for the first cache meeting a cache bypass condition, stopping the load of a data block, which is accessed by the first thread, into the first cache. In the method, by means of acquiring cache access preferences of different threads for at least one cache, and making a thread having a low cache access preference bypass a cache to be accessed, the contention and conflict between threads for a cache is resolved, thereby improving the utilization efficiency of the cache, and realizing low overhead and low power consumption of hardware storage.

## Description

The application claims priority of the Chinese Patent Application No. 202410381320.X, filed on March 29, 2024, the disclosure of which is incorporated herein by reference in its entirety as part of the present application.

### TECHNICAL FIELD

Embodiments of the present disclosure relate to a cache management method and apparatus, a processor, and an electronic apparatus.

### BACKGROUND

Simultaneous multi-threading (SMT) technology is an important technology to improve the overall performance of the central processing unit (CPU). This technology utilizes mechanisms such as multi-issue and out-of-order execution of high-performance CPU cores to enable a single physical CPU core to execute instructions of multiple threads in parallel at the same moment. From the view of software and operating system, a single physical CPU core can be regarded as multiple virtual CPU cores. Depending on the maximum number of active threads supported, SMT can be referred to as SMT2 (up to two active threads), SMT4 (up to four active threads), and so on.

The SMT technique improves the resource utilization efficiency of the high-performance CPU compared to single-threading. When a modem multi-issue high-performance CPU core executes a single thread, its internal execution units and hardware resources are often underutilized most of the time. When a thread is stalled for some reason (e.g., L2 Cache miss), the hardware execution unit can only idle, which results in wasted hardware resources and a lower performance-to-power ratio. In SMT mode, when a thread is stalled, other threads are still able to run, which improves the utilization of hardware resources, thus increasing the multi-thread throughput of the CPU core, overall performance, and performance-to-power ratio.

### SUMMARY

At least one embodiment of the present disclosure provides a cache management method, which includes: acquiring a cache access preference of a first thread among a plurality of threads running in a multi-threading processor for a first cache of the multi-threading processor; and in response to the cache access preference of the first thread for the first cache satisfying a cache bypass condition, preventing a data block accessed by the first thread from being loaded into the first cache.

For example, in the cache management method provided in at least one embodiment of the present disclosure, the cache bypass condition includes the cache access preference being lower than cache access preferences of the other threads and lower than a preset threshold.

For example, in the cache management method provided in at least one embodiment of the present disclosure, the acquiring a cache access preference of a first thread among a plurality of threads running in a multi-threading processor for a first cache of the multi-threading processor includes: computing a data block reuse rate based on a reuse situation of a data block loaded into the first cache by the first thread during a period from entering the first cache to being replaced out of the first cache.

For example, in the cache management method provided in at least one embodiment of the present disclosure, the computing a data block reuse rate based on a reuse situation of a data block loaded into the first cache by the first thread during a period from entering the first cache to being replaced out of the first cache includes: for a first time period, recording a first value for a number of times the data block loaded into the first cache by the first thread is re-accessed during the period from entering the first cache to being replaced out of the first cache; recording a second value for a number of times the data block loaded into the first cache by the first thread is not re-accessed during the period from entering the first cache to being replaced out of the first cache; and computing the data block reuse rate of the data block loaded into the first cache by the first thread based on the first value and the second value, where the data block reuse rate = the first value / (the first value + the second value).

For example, in the cache management method provided in at least one embodiment of the present disclosure, the computing a data block reuse rate based on a reuse situation of a data block loaded into the first cache by the first thread during a period from entering the first cache to being replaced out of the first cache further includes: providing, for the first cache, a first counter and a second counter for the first thread, where the first counter is configured to record the first value and the second counter is configured to record the second value.

For example, in the cache management method provided in at least one embodiment of the present disclosure, the first cache includes a plurality of cache lines, and each cache line of the plurality of cache lines includes a data block, a first field, and a second field, the first field is configured to indicate a thread that loads the data block into the first cache, and the second field is configured to indicate whether the data block is re-accessed during the period from entering the first cache to being replaced out of the first cache.

For example, in the cache management method provided in at least one embodiment of the present disclosure, in a case where one data block of a plurality of data blocks is replaced out of the first cache, in response to a second field corresponding to the data block indicating that the data block is re-accessed during the period from entering the first cache to being replaced out of the first cache, incrementing a first value corresponding to a thread indicated by the first field corresponding to the data block by one; and in response to the second field corresponding to the data block indicating that the data block is not re-accessed during the period from entering the first cache to being replaced out of the first cache, incrementing a second value corresponding to the thread indicated by the first field corresponding to the data block by one.

For example, in the cache management method provided in at least one embodiment of the present disclosure, the acquiring a cache access preference of a first thread among a plurality of threads running in a multi-threading processor for a first cache of the multi-threading processor includes: computing, for the first cache, a hit rate of cache access by the first thread.

For example, in the cache management method provided in at least one embodiment of the present disclosure, the computing, for the first cache, a hit rate of cache access by the first thread, includes: for a first time period, recording a third value for a number of cache hits for the first thread accessing the first cache; recording a fourth value for a number of cache misses for the first thread accessing the first cache; and computing the hit rate of the first thread accessing the first cache based on the third value and the fourth value, where the hit rate = the third value / (the third value + the fourth value).

For example, in the cache management method provided in at least one embodiment of the present disclosure, the computing, for the first cache, a hit rate of cache access by the first thread, further includes: providing, for the first cache, a third counter and a fourth counter for the first thread, where the third counter is configured to record the third value and the fourth counter is configured to record the fourth value.

For example, in the cache management method provided in at least one embodiment of the present disclosure, the acquiring a cache access preference of a first thread among a plurality of threads running in a multi-threading processor for a first cache of the multi-threading processor includes: computing, for the first cache, a probability that an instruction of cache access by the first thread causes a pipeline stall.

At least one embodiment of the present disclosure provides a cache management apparatus, the cache management apparatus includes: an acquisition module configured to acquire a cache access preference of a first thread among a plurality of threads running in a multi-threading processor for a first cache of the multi-threading processor; and a processing module configured to, in response to the cache access preference of the first thread for the first cache satisfying a cache bypass condition, prevent a data block accessed by the first thread from being loaded into the first cache.

For example, in the cache management apparatus provided in at least one embodiment of the present disclosure, the cache bypass condition includes a cache access preference being lower than cache access preferences of other threads and lower than a preset threshold.

For example, in the cache management apparatus provided in at least one embodiment of the present disclosure, the acquisition module includes: a first computing module configured to compute a data block reuse rate based on a reuse situation of a data block loaded into the first cache by the first thread during a period from entering the first cache to being replaced out of the first cache.

For example, in the cache management apparatus provided in at least one embodiment of the present disclosure, the acquisition module includes: a second computing module configured to compute, for the first cache, a hit rate of cache access by the first thread.

At least one embodiment of the present disclosure provides a processor, which includes: a pipeline configured to run a plurality of threads; a first cache; and a cache controller configured to acquire a cache access preference of a first thread among the plurality of threads running in a multi-threading processor for the first cache of the multi-threading processor, and in response to the cache access preference of the first thread for the first cache satisfying a cache bypass condition, prevent a data block accessed by the first thread from being loaded into the first cache.

For example, in the processor provided in at least one embodiment of the present disclosure, the first cache includes a plurality of cache lines, and each cache line of the plurality of cache lines includes a data block, a first field, and a second field, the first field is configured to indicate a thread that loads the data block into the first cache, and the second field is configured to indicate whether the data block is re-accessed during the period from entering the first cache to being replaced out of the first cache.

For example, the processor provided in at least one embodiment of the present disclosure further includes a counter set, where the counter set includes a first counter and a second counter for the first cache, the first counter is configured to record a first value, the second counter is configured to record a second value, the first value represents a number of times the data block loaded into the first cache by the first thread is re-accessed during the period from entering the first cache to being replaced out of the first cache, and the second value represents a number of times the data block loaded into the first cache by the first thread is not re-accessed during the period from entering the first cache to being replaced out of the first cache.

For example, the processor provided in at least one embodiment of the present disclosure further includes multi-level caches, where the multi-level caches includes the first cache.

At least one embodiment of the present disclosure provides an electronic apparatus including the processor provided according to at least one embodiment of the present disclosure.

### BRIEF DESCRIPTION OF DRAWINGS

To more clearly illustrate the technical scheme of the embodiments of the present disclosure, the drawings required to be used in the embodiments will be briefly described below. Obviously, the drawings in the following description only relate to some embodiments of the present disclosure and are not limited to the present disclosure.
Fig. 1A is a schematic block diagram of a computer system;
Fig. 1B is a schematic diagram of a pipeline of a processor core;
Fig. 2 is a flowchart of a cache management method provided by at least one embodiment of the present disclosure;
Fig. 3 is a flowchart of a cache management method provided by at least one embodiment of the present disclosure;
Fig. 4 is a schematic diagram of a counter set provided by at least one embodiment of the present disclosure;
Fig. 5 is a schematic diagram of a cache line provided by at least one embodiment of the present disclosure;
Fig. 6 is a schematic diagram of a counter set provided by at least one embodiment of the present disclosure;
Fig. 7 is a schematic block diagram of a cache management apparatus provided by at least one embodiment of the present disclosure;
Fig. 8 is a schematic block diagram of a processor provided by at least one embodiment of the present disclosure; and
Fig. 9 is a schematic block diagram of an electronic apparatus provided by at least one embodiment of the present disclosure.

### DETAILED DESCRIPTION

In order to make the objects, technical scheme, and advantages of the embodiments of the present disclosure clearer, the technical scheme of the embodiments of the present disclosure will be described clearly and completely in the following in conjunction with the drawings in the embodiments of the present disclosure. Obviously, the described embodiments are a part of the embodiments of the present disclosure and not all of the embodiments. Based on the described embodiments of the present disclosure, all other embodiments obtained by a person skilled in the art without making creative works belong to the scope of protection of the present disclosure.

Unless otherwise defined, technical or scientific terms used in this disclosure shall have the ordinary meaning understood by a person skilled in the art to which this disclosure pertains. The terms "first", "second," and the like, as used in this disclosure, do not indicate any order, quantity, or importance, but are used only to distinguish between different components. The words "comprise/comprising" or "include/including" and the like are intended to mean that the component or object preceded by the word encompasses the components or objects listed after the word and their equivalents, and does not exclude other components or objects. The terms, such as "connect/connecting/connected", "couple/coupling/coupled", or the like, are not limited to a physical connection or mechanical connection, but may include an electrical connection/coupling, directly or indirectly. The terms, "on", "under", "left", "right", or the like are only used to indicate relative position relationship, and when the position of the object which is described is changed, the relative position relationship may be changed accordingly.

The present disclosure is described below by way of several specific embodiments. To keep the following description of the embodiments of the present disclosure clear and concise, detailed descriptions of known functions and known parts (elements) may be omitted. When any part (element) of an embodiment of the present disclosure appears in more than one of the drawings, the part (element) is indicated by the same or similar reference mark in each of the drawings.

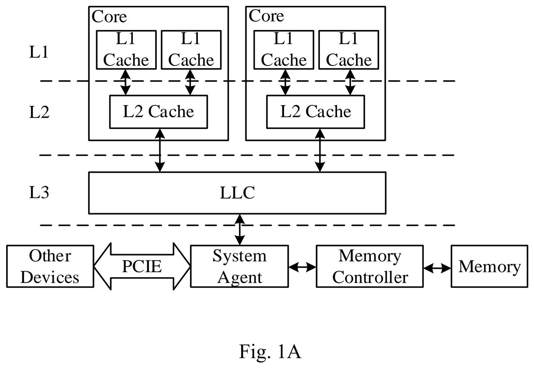

Fig. 1A is a schematic block diagram of a computer system.

As shown in Fig.1A, the Level 1 Cache (L1 Cache) and the Level 2 Cache (L2 Cache) are located inside the processor core and are important parts of the processor for storing data and instructions that the processor frequently accesses. The Level 1 Cache (L1 Cache) is divided into a data cache and an instruction cache, which stores data and instructions, respectively. The Level 2 Cache (L2 Cache) is located after the Level 1 Cache (L1 Cache) and does not distinguish between data and instructions.

In a multi-core processor, each processor core has its own Level 1 Cache (L1 Cache) and Level 2 Cache (L2 Cache). These caches are private and serve only the corresponding processor core. In some processor architectures, all processor cores share a Last Level Cache (LLC) (e.g., the Level 3 Cache or the Level 4 Cache, etc.), which is located outside of the processor core, but is still part of the processor chip. The Last Level Cache (LLC) is used to store data and instructions that need to be shared across multiple processor cores.

In a multi-level cache memory architecture, the Level 1 Cache (L1 Cache) is the fastest but smallest, the Last Level Cache (LLC) is the largest but slowest, and the Level 2 Cache (L2 Cache) is in between the Level 1 Cache (L1 Cache) and the next (e.g., the last) level of cache in terms of access speed and capacity. In addition, the priority of reading data from the Level 1 Cache (L1 Cache) is higher than that of reading data from the Level 2 Cache (L2 Cache), and the priority of reading data from the Level 2 Cache (L2 Cache) is higher than that of reading data from the Last Level Cache (LLC).

As shown in Fig. 1A, the system agent is a communication center between the processor and external devices (e.g., the input/output device, the memory controller, etc.), and is configured to coordinate and manage data transfers between the external devices and to ensure that the processor can efficiently access the external devices. The system agent typically includes a bus controller, an interrupt controller, and other logic necessary to handle a system-level task. The processor is connected to the system agent. The system agent is connected to the memory controller and is connected to other devices via the PCIe bus.

As shown in Fig. 1A, the memory controller (MC) is connected to the memory via the bus and is configured to send and receive data. When the processor needs to access memory, the memory controller sends the request to the memory and waits for a response. Once the memory is ready with the data, it returns the data over the bus to the memory controller, which then passes the data to the processor.

The processor core reads the data in a flow that includes the following S01 to S07.

S01, the processor core outputs a virtual address of the target data or instruction of the access request to an address translator (e.g., an address translation pipeline), which translates the above virtual address into a physical address, and then the processor core determines whether or not the target data or instruction of the access request is in a Level 1 Cache (L1 Cache). The access request may be a read request for the data or instruction.

S02, if the target data or instruction of the access request exists in the Level 1 Cache (L1 Cache), the target data or instruction of the access request is obtained from the Level 1 Cache (L1 Cache), and the target data or instruction of the access request is sent to the processor core by the following S07.

S03, if the target data or instruction of the access request does not exist in the Level 1 Cache (L1 Cache), a storage item is requested from the missed address buffer (MAB), and the storage item is allocated to the above access request.

S04, the missed address buffer requests the target data or instruction of the access request from the next level of cache memory (e.g., the L2 Cache) based on the storage item.

S05, the cache memory at the next level obtains the target data or instruction of the access request and returns the target data or instruction of the access request to the missed address buffer.

In the case where the target data or instruction of the access request is stored in the Level 2 Cache (L2 Cache), the Level 1 Cache (L1 Cache) acquires the target data or instruction of the access request from the Level 2 Cache (L2 Cache). In the case where the target data or instruction of the access request is not stored in the Level 2 Cache (L2 Cache), the Level 2 Cache (L2 Cache) can acquire the target data or instruction of the access request from the memory located at the level below the Level 2 Cache (L2 Cache). For example, the memory located at the next level of the Level 2 Cache (L2 Cache) may be a Level 3 Cache (L3 Cache), a Level 4 Cache (L4 Cache), or a memory, and the like.

S06, the missed address buffer writes the target data or instruction of the access request to the first level cache (L1 Cache).

S07, the Level 1 Cache (L1 Cache) provides the target data or instructions of the access request to the processor core for further processing by the processor core.

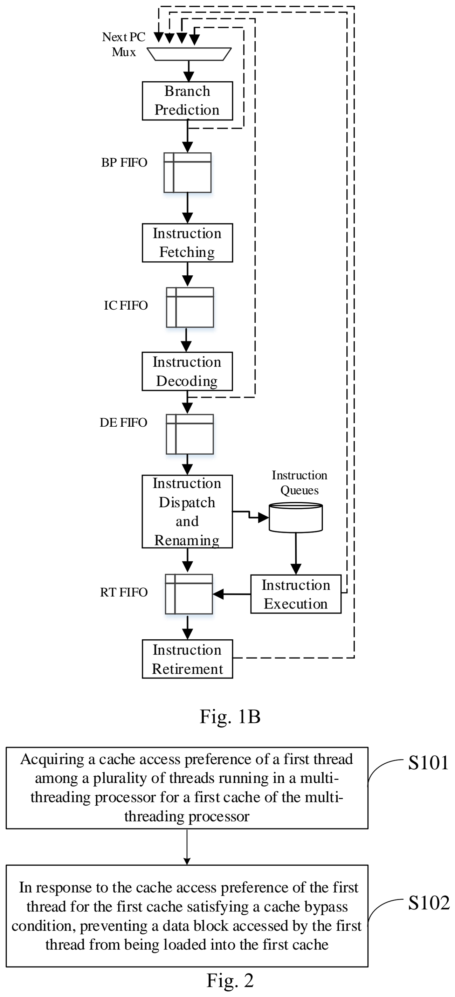

Fig. 1B is a schematic diagram of a pipeline of a processor core, where a dashed line with an arrow indicates a redirected instruction stream.

As shown in Fig. 1B, a processor core (e.g., a CPU core) of a single-core processor or a multi-core processor improves instruction level parallelism using a pipelining technique. The processor core includes multiple pipeline stages, for example, after the pipeline feeds program counters from various sources and selects the next program counter (PC) through a multiplexer (Mux), the instruction corresponding to that program counter goes through branch prediction, instruction fetching, instruction decoding, instruction dispatch and renaming, instruction execution, and instruction retirement. Waiting queues are set up as needed between pipeline stages, and these queues are usually first-in-first-out (FIFO) queues. For example, after the branch prediction unit, a branch prediction (BP) FIFO queue is set up to store the branch prediction results; after the instruction fetching unit, an instruction cache (IC) FIFO is set up to cache the fetched instructions; after the instruction decoding unit, a decoding (DE) FIFO is set up to cache the decoded instructions; after the instruction dispatch and renaming unit, a retire (RT) FIFO is set up to cache instructions waiting for confirmation of the end of execution. The pipeline of the processor core also includes an instruction queue to cache instructions waiting to be executed by the instruction execution unit after instruction dispatch and renaming.

To support high operating frequency, each pipeline stage may in turn include multiple pipeline levels (operation cycles), each of which performs limited operations to further improve the performance of the processor core. Although each pipeline level performs limited operations, this allows each clock to be the shortest possible, improving the performance of the CPU core by increasing the CPU's operating frequency. The performance of a processor core may also be further improved by accommodating more instructions per pipeline level (i.e., superscalar technique). Superscalar refers to the method of executing multiple instructions in parallel in a single cycle with increased instruction-level parallelism, and a processor capable of processing multiple instructions in a single cycle is called a superscalar processor. A superscalar processor is parallelized by adding extra resources to the usual scalar processor by creating multiple pipelines, each of which executes the instructions assigned to it.

Also, to increase the parallelism of instruction execution in a processor, a processor may employ simultaneous multi-threading (SMT) technology, where the pipeline structure of the processor for instruction execution (also referred to as "pipeline") can support two or more (hardware) threads executing at the same time, for example, SMT2 (supports up to two concurrent threads), SMT4 (supporting up to four concurrent threads) or SMT8 (supporting up to eight concurrent threads). In the pipeline of a processor supporting simultaneous multi-threading technology, the processor's computing resources are shared by multiple threads. For example, each thread may have its independent logical registers; and in the pipeline's queues for various controlling functions, they may be shared by multiple threads, like the instruction scheduling queue, or they may be statically partitioned among multiple threads, for example, the instruction reordering queue. simultaneous multi-threading technology can exploit inter-thread parallelism to improve pipeline resource utilization.

A processor with simultaneous multi-threading (SMT) technology may operate in SMT mode or in single-threading mode. For example, in SMT mode, when one thread encounters a wait state, other threads may continue to execute, which effectively improves the hardware resource utilization, and thus enhances the multi-threading processing capability of the CPU cores, the overall performance, and the performance-to-power ratio.

In SMT mode, different hardware threads share a cache, but their access behaviors are not balanced, and threads running at the same time may have different cache access preferences: i.e., some threads need to use certain data blocks frequently, while others may just traverse the data once, and the data blocks are only accessed once or twice, which will not be accessed again for a long period of time; the data blocks used by the former need to be kept in the cache all the time, while those used by the latter do not need to go into the cache. Some SMT schemes do not differentiate between the above two cases. This may lead to high competition for cache space, resulting in "cache conflicts", where threads with poor cache access preferences frequently "flush" the data blocks of threads with high cache access preferences, resulting in a low cache utilization problem.

To improve the space utilization of the cache, modern processors commonly adopt the strategy of cache bypass. For example, some data blocks with poor spatial localization are prevented from entering the cache to reserve more space for other data blocks with better spatial localization.

Some cache bypass techniques (e.g., dead block prediction, re-reference interval prediction, etc.) use certain hardware structures to record the reuse history of a data block and predict whether the block can be bypassed through the reuse history, and perform cache bypassing for dead blocks (i.e., blocks that will not be re-accessed) or for blocks with a large re-reference interval (i.e., a long time between two accesses).

The inventor of the present disclosure notes that the prediction-based cache bypass methods described above require more complex hardware structures to record data block histories and make predictions, and often require predictions for each data block. In SMT mode, running multiple threads simultaneously means that more complex data block and program access behavior resulting from these threads needs to be monitored simultaneously. However, in some schemes SMT does not differentiate between multiple threads and cannot solve the problem of cache conflicts between threads in the case of concurrent multithreading (especially SMT4), and thus suffers from high hardware overhead, high power consumption, and low accuracy in the SMT mode.

At least one embodiment of the present disclosure provides a cache management method, which includes: acquiring a cache access preference of a first thread among a plurality of threads running in a multi-threading processor for a first cache of the multi-threading processor; and in response to the cache access preference of the first thread for the first cache satisfying a cache bypass condition, preventing a data block accessed by the first thread from being loaded into the first cache.

At least one embodiment of the present disclosure provides a cache management method, by acquiring cache access preferences of different threads for at least one cache and bypassing a thread with a low cache access preference from accessing the cache, it resolves contention and conflict between threads for the cache, enhances the utilization efficiency of the cache, and realizes low hardware storage overhead and low power consumption.

The cache management method provided according to the present disclosure is described below in a non-limiting manner by means of a plurality of embodiments and examples thereof, and as described below, different features in these specific examples or embodiments can be combined without conflicting with each other so as to obtain new examples or embodiments, and these new examples or embodiments all fall within the scope of protection of the present disclosure as well.

Fig. 2 is a flowchart of a cache management method provided by at least one embodiment of the present disclosure. As shown in Fig. 2, the cache management method provided by embodiments of the present disclosure includes the following S101~S102.

S101, acquiring a cache access preference of a first thread among a plurality of threads running in a multi-threading processor for a first cache of the multi-threading processor.

For example, the cache management method as shown in Fig. 2 is applied to a processor supporting simultaneous multi-threading technology, which may be a single-core or multi-core central processing unit (CPU), a graphics processing unit (GPU), an AI accelerator, etc., and the present disclosure is not limited thereto. For example, the cache management method shown in Fig. 2 may be applied to various multi-threading processors, such as applied to a multi-threading processor including 2 threads, a multi-threading processor including 4, 6, 8 threads, etc., and the embodiments of the present disclosure are not limited thereto, and can be set according to the actual needs.

It is to be noted that the "first thread" is used to refer to the thread that serves as the object of the current description, but not necessarily the first thread among the plurality of threads running in the multi-threading processor, and it can be any thread among the plurality of threads described above. Moreover, "thread" in this disclosure refers to a hardware thread in the multi-threading processor, which may be based on a software thread in application software, for example, but is not limited to a plurality of different software threads. Hardware threads are the actual computational resources provided by the processor core. Each hardware thread has its own set of registers and execution unit which can execute an instruction stream independently.

For example, the cache level of a multi-threading processor can be configured according to different architectural requirements and performance goals. The multi-threading processor may include only a Level 1 Cache (L1 Cache), or further include a Level 2 Cache (L2 Cache). In a high-performance processor, a more complex multi-level cache structure such as a Level 3 cache (L3 Cache) or even a Level 4 Cache (L4 Cache) may be included, and the embodiments of the present disclosure are not limited thereto.

It should be noted that the "first cache" is used to refer to the cache that serves as the object of the current description. The "first cache" does not have to be the L1 Cache in the multi-threading processor, but may be the L1 Cache or a cache of any level in the multi-level cache structure, for example, the L2 Cache, the L3 Cache, and so on.

For example, in the case of a multi-threading processor with one level of cache, the corresponding cache access preference may be acquired for each thread. For example, in the case of a multi-threading processor with multiple levels of caches, the corresponding cache access preferences of each of the plurality of threads for each level of cache may be acquired.

It should be noted that in the case of a multi-threading processor with multiple levels of caches, it is not necessary to obtain the cache access preference for each level of cache and it can be set according to the actual needs. For example, for a cache with a large capacity, cache bypass may not be required, which will not be discussed later.

S102, in response to the cache access preference of the first thread for the first cache satisfying a cache bypass condition, preventing a data block accessed by the first thread from being loaded into the first cache.

For example, when a thread needs to access a data block in a memory, it does not directly acquire it from the memory, but preferentially looks it up from the cache. If the desired data exists in the cache, it is read directly; if not, it needs to be read from the memory and written to the appropriate cache level. For example, the first thread reads a data block from the memory, and if the cache access preference of the first thread for the first cache satisfies a cache bypass condition, the first thread performs a cache bypass and avoids writing the data block that it reads from the memory into the first cache, thus ensuring efficient utilization of the cache space and avoid unnecessary replacement pressure on other data blocks with good spatial locality and higher cache value.

For example, the cache bypass condition includes the cache access preference being lower than cache access preferences of other threads and lower than a preset threshold. The preset threshold may be flexibly set according to the actual application requirements, and the present disclosure does not restrict this.

For example, the cache access preference may be reflected based on metrics such as the data block reuse rate of the thread, the hit rate of cache access by the thread, the probability that an instruction of cache access by the thread causes a pipeline stall, and the like.

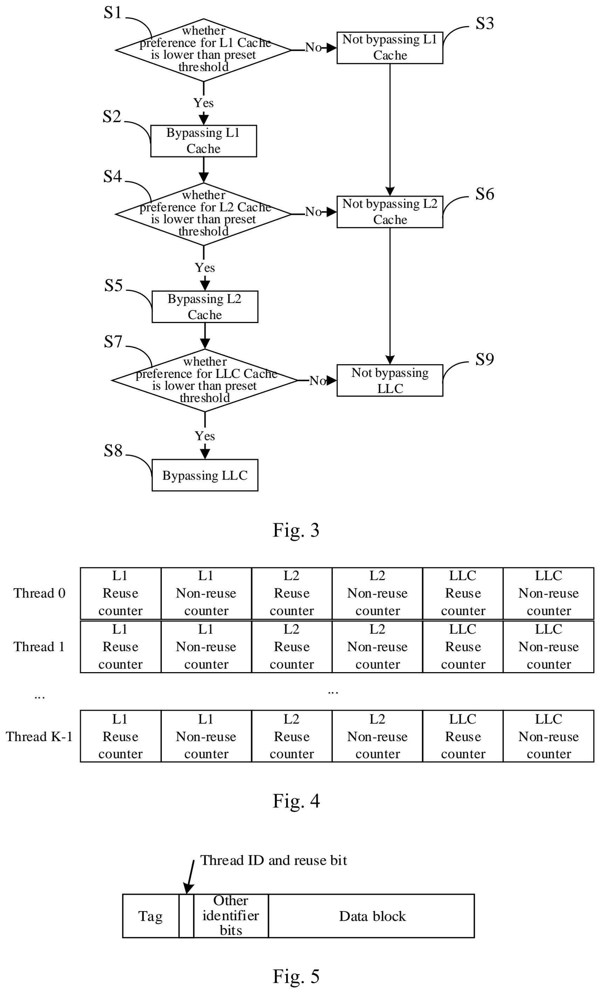

Fig. 3 is a flowchart of a cache management method provided by at least one embodiment of the present disclosure.

For example, as shown in Fig. 3, taking the cache structure of a multi-threading processor with three levels of caches (L1 Cache, L2 Cache, and LLC) as an example, to simplify the description, the three-level cache structure here adopts the inclusive design, i.e., a lower-level cache includes a higher-level cache. For example, a data block located in the first level cache (L1 Cache) must also be located in the second level cache (L2 Cache) and the last level cache (LLC). For each thread of the plurality of threads, the cache management method provided by the embodiments of the present disclosure includes the following S1~S9.

S1: determining whether the cache access preference of the thread for the first level cache (L1 Cache) is lower than a preset threshold. If so, S2 is performed; if not, S3 is performed.

S2: bypassing the first-level cache (L1 Cache).

S3: not bypassing the first-level cache (L1 Cache) and performing S6.

S4: determining whether the cache access preference of the thread for the second-level cache (L2 Cache) is lower than a preset threshold. If so, S5 is performed; if not, S6 is performed.

S5: bypassing the second level cache (L2 Cache).

S6: not bypassing the second level cache (L2 Cache) and performing S9.

S7: determining whether the cache access preference of the thread for the last level cache (LLC) is lower than a preset threshold. If so, S8 is performed; if not, S9 is performed.

S8: bypassing the last level cache (LLC).

S9: not bypassing the last level cache (LLC).

For example, if a cache access preference of a certain thread for a data block at a certain level of a cache is lower than cache access preferences of other threads and lower than a preset threshold, it is determined that the thread is more likely to be executing a code fragment that "flushes the cache", such as traversing a large-scale array or performing random memory access. The data block accessed by the thread are not re-accessed after they are stored in the cache but rather occupy cache storage space. Therefore, all data blocks accessed by the thread are cache bypassed, i.e., the data blocks are actively avoided to be loaded into the cache, so as to save cache space for other threads with high cache access preference.

For example, the cache access preference of a thread may be reflected based on a data block reuse rate of the thread. For a thread with a low data block reuse rate, it means that the data block read from memory and loaded into the cache by the thread is rarely reused (by the thread or other threads) after entering the cache, so the data block accessed by the thread may be cache bypassed, i.e., the data block accessed by the thread are allowed to be not loaded into the cache when a specific condition is satisfied, avoiding to take up the cache resources, and thus improving the cache utilization.

For example, in S101, the data block reuse rate is computed based on a reuse situation of a data block loaded into the first cache by the first thread during a period from entering the first cache to being replaced out of the first cache.

For example, S101 includes S201~ S203.

S201, for the first time period, recording a first value for a number of times the data block loaded into the first cache by the first thread is re-accessed during the period from entering the first cache to being replaced out of the first cache.

S202, for the first time period, recording a second value for a number of times the data block loaded into the first cache by the first thread is not re-accessed during the period from entering the first cache to being replaced out of the first cache.

S203, computing the data block reuse rate of the data block loaded into the first cache by the first thread based on the first value and the second value, where the data block reuse rate = the first value / (the first value + the second value).

For example, the first time period may be set flexibly according to the actual application requirements, and the present disclosure does not limit this. For example, if two counters are used to record the above first value and the second value, respectively, the setting of the first time period may depend on the maximum count value of the counters included in the counter set. For example, when the maximum count value of the counters is set to 1024, the first time period may be set to a time range since the last counter clearing until 1024 cache replacements have occurred, i.e., within the first time period, the two counters record cache hits and cache misses during the 1024 cache replacements, respectively.

For example, for the first cache, a first counter and a second counter are provided for the first thread, the first counter is configured to record the first value as described above and the second counter is configured to record the second value as described above.

For example, the first counter and the second counter may be saturation counters. For example, after a count value of one of the first and second counters reaches a maximum, the following processing methods may be used to ensure the correctness of the counters:
1. the count values of the first and second counters do not continue to increment and remain at their current values;
2. the count values of the first and second counters are cleared to zero;
3. the count values of the first counter and the second counter are simultaneously halved (e.g., reduced by the same value or in the same proportion) to implement normal counting.

It should be noted that the embodiments of the present disclosure do not limit the maximum count value of the counters, which may be set according to the actual needs.

For example, in a multi-threading processor, each thread is provided with a counter set for recording the data block reuse situation of the corresponding thread to each level of the cache, so as to compute the corresponding data block reuse rate.

Fig. 4 is a schematic diagram of a counter set provided by at least one embodiment of the present disclosure.

For example, the number of counters set as described above depends on the maximum value of threads supported by the processor and the number of cache levels. For example, as shown in Fig. 4, the processor core can support up to K threads (thread 0 to thread K-1), and the equipped cache is a three-level structure (L1 Cache, L2 Cache, and the last level cache (LLC)), so 6K saturation counters are required. For example, take thread 0 as an example, set the L1 reuse counter and L1 non-reuse counter to record the data block reuse situation of thread 0 to the L1 Cache, set the L2 reuse counter and L2 non-reuse counter to record the data block reuse situation of thread 0 to the L2 Cache, and set the LLC reuse counter and LLC non-reuse counter to record the data block reuse situation of thread 0 to the LLC. For other threads, the situation is similar to thread 0 and will not be repeated here. For example, when a new thread starts, its corresponding counters are cleared to zero.

For example, the first cache includes a plurality of cache lines or cache blocks, and each of the plurality of cache lines includes a data block, a first field, and a second field. Here the data block corresponds to the cache line.

Fig. 5 is a schematic diagram of a cache line provided by at least one embodiment of the present disclosure.

For example, the first field is configured to indicate a thread that loads the data block into the first cache. For example, as shown in Fig. 5, the first field is the Thread ID of the thread that loaded the data block (Data) into the first cache. For example, the size of the first field is 2bit, and if thread 1 loads the data block into the first cache, the value of the first field is 01. It should be noted that the size of the first field herein may be set according to the actual need, and the embodiments of the present disclosure do not limit this.

For example, the second field is configured to indicate whether the data block is re-accessed during the period from entering the first cache to being replaced out of the first cache. For example, as shown in Fig. 5, the second field is a reuse bit, and the size of the second field is 1 bit. e.g., a reuse bit of a first value (e.g., 0) indicates that the data block is not re-accessed during the period from entering the first cache to being replaced out of the first cache, and a reuse bit of a second value (e.g., 1) indicates that the data block is re-accessed during the period from entering the first cache to being replaced out of the first cache.

It should be noted that the positions of the first field and the second field in the cache line may be set according to the actual situation, and the embodiments of the present disclosure are not limited thereto.

For example, as shown in Fig. 5, each cache line also includes a tag and other identifier bits. For example, the other identifier bits may include a replacement bit, a dirty bit, a valid bit, and so on, or may include more identifier bits, and embodiments of the present disclosure are not limited thereto. The replacement bit is used to indicate whether or not a corresponding data block is replaced out of the cache during cache replacement, the dirty bit is used to indicate whether or not data in the corresponding data block is modified, and the valid bit is used to indicate whether or not data in the corresponding data block is valid. For example, the cache line may also include other information and embodiments of the present disclosure are not limited thereto.

It is to be noted that in the embodiments of the present disclosure, in the case of multi-level caches, for the cache line of each level of cache, reference may be made to the relevant description of the cache line of the first cache in the above embodiments and the relevant contents of the cache line shown in Fig. 5, which will not be repeated herein.

For example, when a cache replacement is required, the identifier bits (including the reuse bit ) of the alternative several data blocks are read by the cache replacement logic circuit to check whether the data block is re-accessed, and thus to obtain the reuse situation of the data block fetched into the level of cache by each thread.

For example, in a case where a data block of a plurality of data blocks is replaced out of the first cache, in response to a second field corresponding to the data block indicating that the data block is re-accessed during the period from entering the first cache to being replaced out of the first cache, a first value corresponding to a thread indicated by the first field corresponding to the data block is incremented by one; and in response to the second field corresponding to the data block indicating that the data block is not re-accessed during the period from entering the first cache to being replaced out of the first cache, a second value corresponding to the thread indicated by the first field corresponding to the data block is incremented by one.

For example, assuming that a reuse bit of 0 indicates that the data block is not re-accessed during the period from entering the first cache to being replaced out of the first cache, and a reuse bit of 1 indicates that the data block is re-accessed during the period from entering the first cache to being replaced out of the first cache. For a data block that thread 0 reads from memory and loads into the Level 1 Cache (L1 Cache), when the data block is replaced out of the Level 1 Cache (L1 Cache), if the reuse information bit (reuse bit) of the data block is 1, then the value of the corresponding L1 reuse counter of thread 0 is incremented by 1. If the reuse information bit (reuse bit) of the data block is 0, then the value of the corresponding L1 non-reuse counter of thread 0 is incremented by 1. At this point, for thread 0 and the Level 1 Cache (L1 Cache), the data block reuse rate = value of L1 reuse counter / (value of L1 reuse counter + value of L1 non-reuse counter).

For example, the cache access preference of a thread may be reflected based on the hit rate of cache access by the thread. The lower the hit rate, the lower the cache access preference of the thread. Cache bypassing of a thread with low cache access preference can also achieve the purpose of improving cache utilization. Compared with the way of computing the data block reuse rate, this method has lower implementation overhead.

For example, in S101, the hit rate of cache access by the first thread is computed for the first cache.

For example, S101 includes S301~S303.

S301, for the first time period, recording the first value for a number of cache hits for the first thread accessing the third cache.

S302, for the first time period, recording the second value for a number of cache misses for the first thread accessing the fourth cache.

S303, computing the hit rate of the first thread accessing the first cache based on the third value and the fourth value. For example, the hit rate = the third value / (the third value + the fourth value).

For example, the relevant contents regarding the first time period can be referred to the relevant description of the first time period in the above embodiments and will not be repeated herein.

For example, for the first cache, a third counter and a fourth counter are provided for the first thread, the third counter is configured to record the aforementioned third value, and the fourth counter is configured to record the aforementioned fourth value. Relevant contents regarding the third counter and the fourth counter can be referred to the relevant descriptions of the first counter and the second counter in the above-described embodiments and will not be repeated herein.

For example, in a multi-threading processor, each thread is provided with a counter set for recording the hit situation of the corresponding thread to each level of the cache, so as to compute the corresponding hit rate.

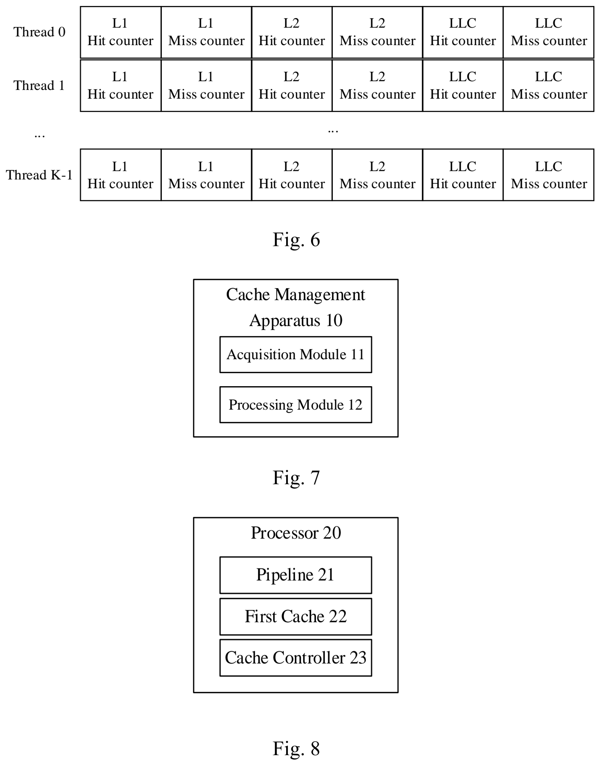

Fig. 6 is a schematic diagram of a counter set provided by at least one embodiment of the present disclosure.

For example, the number of counters set as described above depends on the maximum value of threads supported by the processor and the number of cache levels. For example, as shown in Fig. 6, the processor core can support up to K threads (thread 0 to thread K-1), and the equipped cache is a three-level structure (L1 Cache, L2 Cache, and the last level cache (LLC)), so 6K saturation counters are required. For example, take thread 0 as an example, set the L1 hit counter and L1 miss counter to record the hit situation of thread 0 to the L1 Cache, set the L2 hit counter and L2 miss counter to record the hit situation of thread 0 to the L2 Cache, and set the LLC hit counter and LLC miss counter to record the hit situation of thread 0 to the LLC. For other threads, the situation is similar to thread 0 and will not be repeated here. For example, when a new thread starts, its corresponding counters are cleared to zero.

For example, the cache access preference of the thread may be reflected based on the criticality of the instruction of cache access by the thread. For example, the cache access preference of a thread may be reflected based on the probability of a pipeline stall (e.g., Reorder Buffer (ROB) Stall) caused by the instruction of cache access by the thread. If the percentage of ROB Stall is small, the instruction of cache access by the thread has a low degree of criticality, and the lower the degree of criticality, the lower the cache access preference of the thread. Cache bypassing of a thread with low cache access preference can also achieve the purpose of improving cache utilization.

For example, in S101, for the first cache, the probability that the instruction of cache access by the first thread causes a pipeline stall is computed.

For example, S101 includes S401~ S403.

S401, for the first time period, recording a fifth value of the instruction of cache access by the first thread causing the pipeline to stall.

S302, for the first time period, recording a sixth value of the instruction of cache access by the first thread not causing the pipeline to stall.

S303, computing a probability that the instruction of cache access by the first thread causes the pipeline to stall based on the fifth value and the sixth value, respectively. For example, the probability that the instruction of cache access by the first thread causes the pipeline to stall = the fifth value / (the fifth value + the sixth value).

For example, the relevant contents regarding the first time period can be referred to the relevant description of the first time period in the above embodiments and will not be repeated herein.

For example, for the first cache, a fifth counter and a sixth counter are provided for the first thread, the fifth counter is configured to record the aforementioned fifth value, and the sixth counter is configured to record the aforementioned sixth value. Relevant contents regarding the fifth counter and the sixth counter can be referred to the relevant descriptions of the first counter and the second counter in the above-described embodiments and will not be repeated herein.

For example, in a multi-threading processor, each thread is provided with a counter set for recording a situation in which an instruction of cache access by the corresponding thread causes the pipeline to stall, thereby computing a corresponding probability. For example, the relevant contents of the counter set may be referred to the relevant description of the counter set in the above embodiments and will not be repeated herein.

Fig. 7 is a schematic block diagram of a cache management apparatus provided by at least one embodiment of the present disclosure. As shown in Fig. 7, the cache management apparatus 10 provided by the embodiment of the present disclosure includes an acquisition module 11 and a processing module 12.

For example, the acquisition module 11 is configured to acquire a cache access preference of a first thread among a plurality of threads running in a multi-threading processor for a first cache of the multi-threading processor.

For example, the processing module 12 is configured to, in response to the cache access preference of the first thread for the first cache satisfying a cache bypass condition, prevent a data block accessed by the first thread from being loaded into the first cache.

The related contents of the acquisition module 11 and the processing module 12 may refer to the related descriptions of S101 and S102 shown in Fig. 2 in the embodiment of the above cache management method, and will not be repeated here. The modules shown in Fig. 7 can be implemented by software, hardware, firmware, or any combination thereof.

For example, in at least one embodiment of the present disclosure, the cache bypass condition includes that the cache access preference being lower than cache access preferences of other threads and lower than a preset threshold.

For example, in at least one embodiment of the present disclosure, the acquisition module 11 includes a first computing module configured to compute a data block reuse rate based on a reuse situation of a data block loaded into the first cache by the first thread during a period from entering the first cache to being replaced out of the first cache.

For example, in at least one embodiment of the present disclosure, the first computing module includes a first recording unit, a second recording unit and a first computing unit. The first recording unit is configured to record a first value for a number of times the data block loaded into the first cache by the first thread is re-accessed during the period from entering the first cache to being replaced out of the first cache; the second recording unit is configured to record a second value for a number of times the data block loaded into the first cache by the first thread is not re-accessed during the period from entering the first cache to being replaced out of the first cache; and the first computing unit is configured to compute the data block reuse rate of the data block loaded into the first cache by the first thread based on the first value and the second value, where the data block reuse rate = the first value / (the first value + the second value).

For example, in at least one embodiment of the present disclosure, the first computing module further includes a first providing unit configured to provide, for the first cache, a first counter and a second counter for the first thread. The first counter is configured to record the first value; the second counter is configured to record the second value.

For example, in at least one embodiment of the present disclosure, the first cache includes a plurality of cache lines, and each cache line of the plurality of cache lines includes a data block, a first field, and a second field, the first field is configured to indicate a thread that loads the data block into the first cache, and the second field is configured to indicate whether the data block is re-accessed during the period from entering the first cache to being replaced out of the first cache.

For example, in at least one embodiment of the present disclosure, in a case where one data block of a plurality of data blocks is replaced out of the first cache, the first providing unit is further configured to, in response to a second field corresponding to the data block indicating that the data block is re-accessed during the period from entering the first cache to being replaced out of the first cache, increment a first value corresponding to a thread indicated by the first field corresponding to the data block by one; and in response to the second field corresponding to the data block indicating that the data block is not re-accessed during the period from entering the first cache to being replaced out of the first cache, increment a second value corresponding to the thread indicated by the first field corresponding to the data block by one.

For example, in at least one embodiment of the present disclosure, the acquisition module 11 includes a second computing module configured to compute the hit rate of cache access by the first thread for the first cache.

For example, in at least one embodiment of the present disclosure, the first computing module includes a third recording unit, a fourth recording unit and a second computing unit. The third recording unit is configured to record a third value for a number of cache hits for the first thread accessing the first cache for a first time period; the fourth recording unit is configured to record a fourth value for a number of cache misses for the first thread accessing the first cache for the first time period; the second computing unit is configured to compute the hit rate of the first thread accessing the first cache according to the third value and the fourth value, where the hit rate = the third value / (the third value + the fourth value).

For example, in at least one embodiment of the present disclosure, the second computing module further includes a second providing unit configured to provide, for the first cache, a third counter and a fourth counter for the first thread. The third counter is configured to record the third value; the fourth counter is configured to record the fourth value.

For example, in at least one embodiment of the present disclosure, the acquisition module 11 includes a third computing module configured to compute, for the first cache, the probability that an instruction of cache access by the first thread causes a pipeline stall.

Fig. 8 is a schematic block diagram of a processor provided by at least one embodiment of the present disclosure.

As shown in Fig. 8, the processor 20 provided by embodiments of the present disclosure includes a pipeline 21, a first cache 22, and a cache controller 23. For example, the processor 20 may be a single-core or multi-core CPU, a GPU, an AI accelerator, etc., and the present disclosure does not limit this.

In at least one embodiment of the present disclosure, the pipeline 21 is configured to run a plurality of threads; the present application is not limiting for the pipeline of the processor, as can be seen in the exemplary composition and operation mode illustrated in Fig. 1B.

In at least one embodiment of the present disclosure, the cache controller 23 is configured to acquire a cache access preference of a first thread among the plurality of threads running in a multi-threading processor for the first cache 22 of the multi-threading processor, and in response to the cache access preference of the first thread for the first cache 22 satisfying a cache bypass condition, prevent a data block accessed by the first thread from being loaded into the first cache 22. For example, the cache controller 23 may be formed integrally with the first cache 22. For example, when the processor includes multi-level caches, each level of cache may have a corresponding cache manager.

For example, the first cache 22 includes a plurality of cache lines, and each cache line of the plurality of cache lines includes a data block, a first field, and a second field; the first field is configured to indicate a thread that loads the data block into the first cache 22, and the second field is configured to indicate whether the data block is re-accessed during the period from entering the first cache 22 to being replaced out of the first cache 22.

Relevant content of the first field and the second field can be found in the relevant description of Fig. 5 in the embodiment of the cache management method described above, and will not be repeated herein.

For example, the processor 20 provided in at least one embodiment of the present disclosure further includes a counter set. For example, the counter set includes a first counter and a second counter for the first cache 22, the first counter is configured to record a first value, the second counter is configured to record a second value, the first value represents a number of times the data block loaded into the first cache 22 by the first thread is re-accessed during the period from entering the first cache 22 to being replaced out of the first cache 22, and the second value represents a number of times the data block loaded into the first cache 22 by the first thread is not re-accessed during the period from entering the first cache 22 to being replaced out of the first cache 22. The counter set may be implemented, for example, by a register or a static random access memory (SRAM).

Relevant content of the counter set can be found in the relevant description of Fig. 4 and Fig. 6 in the embodiment of the cache management method described above, and will not be repeated herein.

For example, the processor 20 provided in at least one embodiment of the present disclosure further includes multi-level caches. For example, the multi-level caches include a first cache 22. For example, the multi-level caches may include only an L1 Cache, may further include an L2 Cache, and in high-performance processors, may further include an L3 Cache, or even an L4 Cache, and other more complex multi-level cache structures. The embodiments of the present disclosure do not limit this and can be set according to the actual needs.

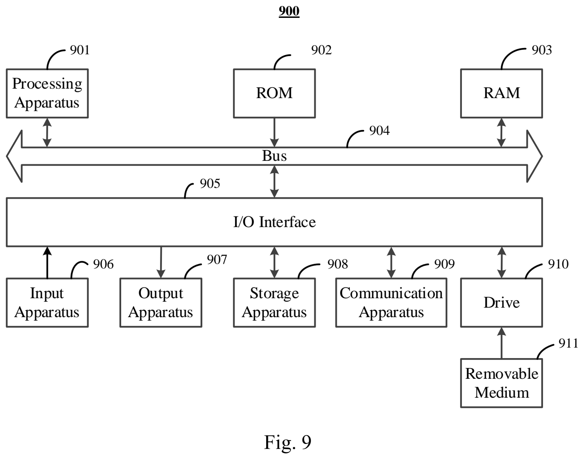

At least one embodiment of the present disclosure further provides an electronic apparatus that includes the processor of any of the above embodiments. Fig. 9 is a schematic block diagram of an electronic apparatus provided by at least one embodiment of the present disclosure.

The electronic apparatus in embodiments of the present disclosure may include, but is not limited to, mobile terminals such as a mobile phone, a notebook computer, a digital broadcasting receiver, a personal digital assistant (PDA), a portable Android device (PAD), a portable media player (PMP), a vehicle-mounted terminal (e.g., a vehicle-mounted navigation terminal), a wearable electronic device or the like, and fixed terminals such as a digital TV, a desktop computer, or the like. The electronic apparatus 900 illustrated in Fig. 9 is merely an example and should not impose any limitation on the functions and scope of use of the embodiments of the present disclosure.

For example, as shown in Fig. 9, in some examples, the electronic apparatus 900 includes a processing apparatus (e.g., a central processing unit, a graphics processing unit, etc.) 901, which may include a processor of any of the above-described embodiments. The electronic apparatus 900 may perform various suitable actions and processing according to a program stored in a read-only memory (ROM) 902 or a program loaded from a storage apparatus 908 into a random-access memory (RAM) 903. The RAM 903 further stores various programs and data required for operations of the electronic apparatus 900. The processing apparatus 901, the ROM 902, and the RAM 903 are interconnected by means of a bus 904. An input/output (I/O) interface 905 is also connected to the bus 904.

For example, the following components may be connected to the I/O interface 905, which includes: an input apparatus 906 such as a touch screen, a touch pad, a keyboard, a mouse, a camera, a microphone, an accelerometer, a gyroscope, and the like; the output apparatus 907 such as a liquid crystal display (LCD), a loudspeaker, a vibrator, and the like; the storage apparatus 908 such as a tape, a hard disk, and the like. The I/O interface 905 may further include, for example, the communication apparatus 909 of a network interface card such as a Lan card, a modem, etc. The communication apparatus 909 may allow the electronic apparatus 900 to perform wireless or wired communication with other devices to exchange data and perform communication processing via a network such as the Internet. The drive 910 is also connected to the I/O interface 905 as needed. The removable medium 911, such as a magnetic disk, an optical disk, a magneto-optical disk, a semiconductor memory, etc., is installed on the drive 910 as needed so that the computer program read from it can be installed into the storage apparatus 908 as needed. Although Fig. 9 shows an electronic apparatus 900 including various apparatuses, it should be understood that not all the apparatuses shown are required to be implemented or included. More or fewer apparatuses may alternatively be implemented or included.

For example, the electronic apparatus 900 may further include a peripheral interface (not shown in the drawings) and the like. The peripheral interface may be various types of interfaces, such as a USB interface, a lightning interface, and the like. The communication apparatus 909 may communicate with networks and other devices via wireless communication, such as the Internet, an intranet and/or a wireless network such as a cellular telephone network, a wireless local area network (LAN), and/or a metropolitan area network (MAN). The wireless communication may use any of a variety of communication standards, protocols, and technologies including, but not limited to, global system for mobile communications (GSM), enhanced data GSM environment (EDGE), wideband code division multiple access (W-CDMA), code division multiple access (CDMA), time division multiple access (TDMA), Bluetooth, Wi-Fi (e.g., based on IEEE 802. 11a, IEEE 802. 11b, IEEE 802. 11g, and/or IEEE 802. 11n standards), voice over internet protocol (VoIP)-based transmission, Wi-MAX, protocols for e-mail, instant messaging, and/or short message service (SMS), or any other suitable communication protocol.

For example, the electronic apparatus 900 may be any device such as a cell phone, a tablet computer, a laptop computer, an e-book, a game console, a television, a digital photo frame, a navigator, a server, etc., or any combination of data processing apparatus and hardware, and the embodiments of the present disclosure do not limit this.

Although the present disclosure has been described in detail above in terms of general description and specific embodiments, some modifications or improvements can be made on the basis of the embodiments of the present disclosure, which is obvious to those skilled in the art. Therefore, such modifications or improvements made on the basis of not deviating from the spirit of the present disclosure fall within the scope of protection claimed in the present disclosure.

There are also the following points to be made for the present disclosure:
(1) The drawings of the embodiments of the present disclosure relate only to the structures involved with the embodiments of the present disclosure, and other structures can be referred to as the usual designs.
(2) For clarity, in the drawings used to describe the embodiments of the present disclosure, the thicknesses of the layers or regions are enlarged or reduced, i.e., these drawings are not drawn to the actual scale.
(3) Without conflict, the embodiments and features in the embodiments of the present disclosure may be combined with each other to obtain new embodiments.

The above are only specific embodiments of the present disclosure, but the scope of protection of the present disclosure is not limited thereto. The scope of protection of the present disclosure shall be subject to the scope of protection of the stated claims.

## Claims

1. A cache management method, comprising:
acquiring a cache access preference of a first thread among a plurality of threads running in a multi-threading processor for a first cache of the multi-threading processor; and
in response to the cache access preference of the first thread for the first cache satisfying a cache bypass condition, preventing a data block accessed by the first thread from being loaded into the first cache.

2. The cache management method according to claim 1, wherein the cache bypass condition comprises the cache access preference being lower than cache access preferences of other threads and lower than a preset threshold.

3. The cache management method according to claim 1 or 2, wherein the acquiring a cache access preference of a first thread among a plurality of threads running in a multi-threading processor for a first cache of the multi-threading processor comprises:
computing a data block reuse rate based on a reuse situation of a data block loaded into the first cache by the first thread during a period from entering the first cache to being replaced out of the first cache.

4. The cache management method according to claim 3, wherein the computing a data block reuse rate based on a reuse situation of a data block loaded into the first cache by the first thread during a period from entering the first cache to being replaced out of the first cache comprises:
for a first time period,
recording a first value for a number of times the data block loaded into the first cache by the first thread is re-accessed during the period from entering the first cache to being replaced out of the first cache;
recording a second value for a number of times the data block loaded into the first cache by the first thread is not re-accessed during the period from entering the first cache to being replaced out of the first cache; and
computing the data block reuse rate of the data block loaded into the first cache by the first thread based on the first value and the second value, wherein the data block reuse rate = the first value / (the first value + the second value).

5. The cache management method according to claim 4, wherein the computing a data block reuse rate based on a reuse situation of a data block loaded into the first cache by the first thread during a period from entering the first cache to being replaced out of the first cache further comprises:
providing, for the first cache, a first counter and a second counter for the first thread, wherein the first counter is configured to record the first value and the second counter is configured to record the second value.

6. The cache management method according to claim 5, wherein the first cache comprises a plurality of cache lines, and each cache line of the plurality of cache lines comprises a data block, a first field, and a second field,
the first field is configured to indicate a thread that loads the data block into the first cache, and
the second field is configured to indicate whether the data block is re-accessed during the period from entering the first cache to being replaced out of the first cache.

7. The cache management method according to claim 6,
wherein, in a case where one data block of a plurality of data blocks is replaced out of the first cache,
in response to a second field corresponding to the data block indicating that the data block is re-accessed during the period from entering the first cache to being replaced out of the first cache, incrementing a first value corresponding to a thread indicated by the first field corresponding to the data block by one; and
in response to the second field corresponding to the data block indicating that the data block is not re-accessed during the period from entering the first cache to being replaced out of the first cache, incrementing a second value corresponding to the thread indicated by the first field corresponding to the data block by one.

8. The cache management method according to claim 1 or 2, wherein the acquiring a cache access preference of a first thread among a plurality of threads running in a multi-threading processor for a first cache of the multi-threading processor comprises:
computing, for the first cache, a hit rate of cache access by the first thread.

9. The cache management method according to claim 8, wherein the computing, for the first cache, a hit rate of cache access by the first thread, comprises:
for a first time period,
recording a third value for a number of cache hits for the first thread accessing the first cache;
recording a fourth value for a number of cache misses for the first thread accessing the first cache; and
computing the hit rate of the first thread accessing the first cache based on the third value and the fourth value, wherein the hit rate = the third value / (the third value + the fourth value).

10. The cache management method according to claim 9, wherein the computing, for the first cache, a hit rate of cache access by the first thread, further comprises:
providing, for the first cache, a third counter and a fourth counter for the first thread, wherein the third counter is configured to record the third value and the fourth counter is configured to record the fourth value.

11. The cache management method according to claim 1 or 2, wherein the acquiring a cache access preference of a first thread among a plurality of threads running in a multi-threading processor for a first cache of the multi-threading processor comprises:
computing, for the first cache, a probability that an instruction of cache access by the first thread causes a pipeline stall.

12. A cache management apparatus, comprising:
an acquisition module, configured to acquire a cache access preference of a first thread among a plurality of threads running in a multi-threading processor for a first cache of the multi-threading processor; and
a processing module, configured to, in response to the cache access preference of the first thread for the first cache satisfying a cache bypass condition, prevent a data block accessed by the first thread from being loaded into the first cache.

13. The cache management apparatus according to claim 12, wherein the cache bypass condition comprises the cache access preference being lower than cache access preferences of other threads and lower than a preset threshold.

14. The cache management apparatus according to claim 12 or 13, wherein the acquisition module comprises:
a first computing module, configured to compute a data block reuse rate based on a reuse situation of a data block loaded into the first cache by the first thread during a period from entering the first cache to being replaced out of the first cache.

15. The cache management apparatus according to any one of claims 12-14, wherein the acquisition module comprises:
a second computing module, configured to compute, for the first cache, a hit rate of cache access by the first thread.

16. A processor, comprising:
a pipeline, configured to run a plurality of threads;
a first cache; and
a cache controller, configured to acquire a cache access preference of a first thread among the plurality of threads running in a multi-threading processor for the first cache of the multi-threading processor, and in response to the cache access preference of the first thread for the first cache satisfying a cache bypass condition, prevent a data block accessed by the first thread from being loaded into the first cache.

17. The processor according to claim 16, wherein the first cache comprises a plurality of cache lines, and each cache line of the plurality of cache lines comprises a data block, a first field, and a second field,
the first field is configured to indicate a thread that loads the data block into the first cache, and
the second field is configured to indicate whether the data block is re-accessed during the period from entering the first cache to being replaced out of the first cache.

18. The processor according to claim 16 or 17, further comprising a counter set, wherein the counter set comprises a first counter and a second counter for the first cache,
the first counter is configured to record a first value,
the second counter is configured to record a second value,
the first value represents a number of times the data block loaded into the first cache by the first thread is re-accessed during the period from entering the first cache to being replaced out of the first cache, and
the second value represents a number of times the data block loaded into the first cache by the first thread is not re-accessed during the period from entering the first cache to being replaced out of the first cache.

19. The processor according to any one of claims 16-18, further comprising multi-level caches, wherein the multi-level caches comprise the first cache.

20. An electronic apparatus, comprising the processor according to any one of claims 16-19.
